# EUROPÄISCHE PATENTANMELDUNG

(11) **EP 3 206 176 A1**
(43) Veröffentlichungstag der Anmeldung: **16.08.2017**
(21) Anmeldenummer: 17150981.3
(22) Anmeldetag: 11.01.2017
(51) Int. Cl.: G06Q 10/08, G06Q 50/28

(54) **VERFAHREN, VORRICHTUNGEN UND COMPUTERPROGRAMME ZUM BEREITSTELLEN EINES SCHLOSSTEUERUNGSSIGNALS FÜR EIN MOBILES LOGISTIKZIEL**

(30) Priorität: 09.02.2016 DE 102016201941
(71) Anmelder: VOLKSWAGEN AKTIENGESELLSCHAFT, 38440 Wolfsburg (DE)
(72) Erfinder: Canis, Daniel, 10435 Berlin (DE); Karrenberg, Simon, 38104 Braunschweig (DE)

(57) **Zusammenfassung**

Die Erfindung betrifft Verfahren, Vorrichtungen (10; 20) und Computerprogramme zum Bereitstellen eines Schlossteuerungssignals für ein mobiles Logistikziel. Ein Verfahren für eine Zentralstelle (100) zum Bereitstellen eines Schlosssteuerungssignals für ein mobiles Logistikziel (300) umfasst Erhalten (110) von Information über eine Lieferanfrage, wobei die Information über die Lieferanfrage Information über einen voraussichtlichen Lieferzeitraum einer Lieferung umfasst. Das Verfahren umfasst ferner Bereitstellen (112) einer Berechtigungsanfrage zum Öffnen des mobilen Logistikziels während eines Lieferzeitraums für ein Mobilgerät (200) eines Empfängers der Lieferung basierend auf der Information über die Lieferanfrage und der Information über den voraussichtlichen Lieferzeitraum. Das Verfahren umfasst ferner Erhalten (114) von Information über eine Berechtigung zum Öffnen des mobilen Logistikziels während des voraussichtlichen Lieferzeitraums von dem Mobilgerät (200). Das Verfahren umfasst ferner Erhalten (120) von Information über eine Schlossanfrage und von Zusteller-Standortinformation von einem Mobilgerät (200) eines Zustellers der Lieferung. Das Verfahren umfasst ferner Erhalten (122) von Logistikziel-Standortinformation von dem Logistikziel (300). Das Verfahren umfasst ferner Bestimmen (130) einer Zusteller-Berechtigung zum Öffnen des mobilen Logistikziels (300) basierend auf der Information über die Schlossanfrage und basierend auf der Information über die Berechtigung. Das Verfahren umfasst ferner Berechnen (132) einer Zusteller-Standort-Differenz zwischen der Logistikziel-Standortinformation und der Zusteller-Standortinformation. Das Verfahren umfasst ferner Vergleichen (134) eines Zeitstempels der Schlossanfrage mit dem voraussichtlichen Lieferzeitraum. Das Verfahren umfasst ferner Bestimmen (140) des Schlosssteuerungssignals für das mobile Logistikziel (300) basierend auf der Zusteller-Berechtigung, basierend auf der Zusteller-Standort-Differenz und basierend auf dem Vergleichen (124) des Zeitstempels mit dem voraussichtlichen Lieferzeitraum. Das Verfahren umfasst ferner Bereitstellen (150) des Schlosssteuerungssignals für das mobile Logistikziel (300), falls der Zusteller berechtigt zum Öffnen des mobilen Logistikziels ist, falls die Zusteller-Standort-Differenz einer Distanz-Bedingung genügt und falls der Zeitstempel innerhalb des voraussichtlichen Lieferzeitraums liegt.

## Beschreibung

Die Erfindung betrifft Verfahren, Vorrichtungen und Computerprogramme zum Bereitstellen eines Schlossteuerungssignals für ein mobiles Logistikziel gemäß den unabhängigen Ansprüchen, genauer, aber nicht ausschließlich basierend auf einer Berechtigungsanfrage für ein Mobilgerät eines Empfängers einer Lieferung.

Mobilgeräte werden in zunehmenden Maße genutzt, um rechtsverbindliche Transaktionen durchzuführen: Mobilgeräte werden etwa für Online-Banking oder Shopping genutzt, und auch Behördenkommunikation kann etwa über zertifizierte Mail-Anbieter durchgeführt werden. Eine zunehmende Verbreitung von Verschlüsselung erhöht die Sicherheit der Transaktionen, und Vorrichtungen zur sicheren Authentifizierung der Nutzer, beispielsweise basierend auf Fingerabdruckscannern oder Iris-Kameras ermöglichen eine häufig hinreichend sichere Authentifizierung ihrer Nutzer.

Der Einkauf bei Versandhändlern, z.B. Online-Händlern, ist ungebrochen populär. Das Bestellvolumen bei Versandhändlern steigt stetig. Kunden schätzen u.a. die nichtzeitgebundene Verfügbarkeit des Angebots, um etwa nach Ladenschluss noch Einkäufe tätigen zu können, oder um sperrige Einkäufe von einem Lieferdienst liefern zu lassen. Gleichzeitig steigen dabei die Anforderungen an den Empfang der Ware. Viele Kunden können tagsüber keine Pakete empfangen, und Paketstellen für den Empfang von Paketen haben in vielen Fällen ebenfalls begrenzte Öffnungszeiten und machen daher den Komfortgewinn zunichte. Eine Möglichkeit, diese Beschränkung zu umgehen ist die Lieferung in ein mobiles Depot, etwa in den Kofferraum eines Fahrzeugs. Gleichzeitig stellt ein Zugriff auf und eine Lokalisierung des Fahrzeugs einen Eingriff in die Privatsphäre und das Eigentum des Empfängers dar.

Es besteht daher der Bedarf, einen sicheren Zugriff auf das mobile Logistikziel bereitzustellen, wobei die Privatsphäre des Nutzers und die Sicherheit des Eigentums gegenüber dem Logistikdienstleister gewahrt bleiben. Diesem Bedarf wird von den Verfahren, Vorrichtungen und Computerprogrammen gemäß den unabhängigen Ansprüchen Rechnung getragen.

Ausführungsbeispiele schaffen ein Verfahren zum Bereitstellen eines Schlosssteuerungssignals für ein mobiles Logistikziel, beispielsweise ein Fahrzeug. Möchte ein Logistikdienstleister eine Lieferung an das mobile Logistikziel ausliefern, so stellt ein Auftraggeber oder der Logistikdienstleister Information über eine Lieferanfrage für eine Zentralstelle, etwa ein Rechenzentrum oder einen Server, bereit. Basierend auf der Lieferanfrage wird einem Mobilgerät eines Empfängers der Lieferung eine Berechtigungsanfrage bereitgestellt, die dieser für den geplanten Lieferzeitraum freigeben kann. Der Nutzer erteilt damit der Zentralstelle die Berechtigung, bei einer validen Anfrage des Zustellers zum Entriegeln des mobilen Logistikziels das mobile Logistikziel zu entriegeln, sofern eine Überprüfung der aktuellen Zeit mit der Zeit der Berechtigung eine Übereinstimmung und eine Überprüfung der Position des Zustellers mit dem mobilen Lieferziel eine ungefähre Übereinstimmung ergibt. Sind die Voraussetzungen gegeben, so kann das Verfahren die Entriegelung des mobilen Logistikziels veranlassen.

Ausführungsbeispiele schaffen ein Verfahren für eine Zentralstelle zum Bereitstellen eines Schlosssteuerungssignals für ein mobiles Logistikziel. Das Verfahren umfasst Erhalten von Information über eine Lieferanfrage. Die Information über die Lieferanfrage umfasst Information über einen voraussichtlichen Lieferzeitraum einer Lieferung. Das Verfahren umfasst ferner Bereitstellen einer Berechtigungsanfrage zum Öffnen des mobilen Logistikziels während eines Lieferzeitraums für ein Mobilgerät eines Empfängers der Lieferung, basierend auf der Information über die Lieferanfrage und der Information über den voraussichtlichen Lieferzeitraum. Das Verfahren umfasst ferner Erhalten von Information über eine Berechtigung zum Öffnen des mobilen Logistikziels während des voraussichtlichen Lieferzeitraums von dem Mobilgerät. Das Verfahren umfasst ferner Erhalten von Information über eine Schlossanfrage und von Zusteller-Standortinformation von einem Mobilgerät eines Zustellers der Lieferung. Das Verfahren umfasst ferner Erhalten von Logistikziel-Standortinformation von dem Logistikziel. Das Verfahren umfasst ferner Bestimmen einer Zusteller-Berechtigung zum Öffnen des mobilen Logistikziels basierend auf der Information über die Schlossanfrage und basierend auf der Information über die Berechtigung. Das Verfahren umfasst ferner Berechnen einer Zusteller-Standort-Differenz zwischen der Logistikziel-Standortinformation und der Zusteller-Standortinformation. Das Verfahren umfasst ferner Vergleichen eines Zeitstempels der Schlossanfrage mit dem voraussichtlichen Lieferzeitraum. Das Verfahren umfasst ferner Bestimmen des Schlosssteuerungssignals für das mobile Logistikziel basierend auf der Berechtigung des Zustellers, basierend auf der Zusteller-Standort-Differenz und basierend auf dem Vergleichen des Zeitstempels mit dem voraussichtlichen Lieferzeitraum. Das Verfahren umfasst ferner Bereitstellen des Schlosssteuerungssignals für das mobile Logistikziel, falls der Zusteller zum Öffnen des mobilen Logistikziels berechtigt ist, falls die Zusteller-Standort-Differenz einer Distanz-Bedingung genügt und falls der Zeitstempel innerhalb des voraussichtlichen Lieferzeitraums liegt. Das Bereitstellen der Berechtigungsanfrage für das Mobilgerät des Empfängers ermöglicht das explizite Ausstellen einer Berechtigung eines Zugangs zum mobilen Logistikziels, was eine Übertragung der Verantwortung zum Empfänger ermöglicht. Die Nutzung weiterer Kriterien wie z.B. die Position des Zustellers und der Uhrzeit können die Sicherheit weiter erhöhen.

In zumindest einigen Ausführungsbeispielen findet das Erhalten der Information über die Berechtigung vor dem Erhalten der Information über der Schlossanfrage statt. Das Ausstellen der Berechtigung vor einem Zustellversuch ermöglicht eine zeitliche Entkoppelung von Berechtigungserteilung und Zustellversuch, so dass während der Zustellung keine zeitnahe Reaktion des Empfängers nötig ist.

In manchen Ausführungsbeispielen kann die Zusteller-Standortinformation Koordinaten eines Satelliten-basierten Positionierungssystems entsprechen. Das Berechnen der Zusteller-Standort-Differenz kann auf einem Vergleich der Koordinaten der Zusteller-Standortinformation mit Koordinaten der Lieferziel-Standortinformation basieren. Die Nutzung von Koordinaten des Satelliten-basierten Positionierungssystems, etwa des Globalen Positionierungs-Systems (GPS), ermöglicht eine programmatische Überprüfung einer Anwesenheit des Zustellers am Zustellort ohne eine Nutzerinteraktion.

In einigen Ausführungsbeispielen kann das Verfahren ferner ein Erhalten von Information über einen Widerruf der Berechtigung von dem Mobilgerät des Empfängers umfassen. Die Information über den Widerruf kann anzeigen, dass der Nutzer die Berechtigung zum Öffnen des mobilen Logistikziels während des voraussichtlichen Lieferzeitraums widerruft. Das Bestimmen des Schlosssteuerungssignals kann ferner auf der Information über den Widerruf basiert sein. Alternativ oder zusätzlich kann das Bereitstellen nicht ausgeführt werden, wenn die Berechtigung durch die Information über den Widerruf wiederrufen ist. Die Möglichkeit des Widerrufs ermöglicht einen Abbruch des Zustellversuchs durch den Empfänger, etwa wenn das mobile Logistikziel nicht am geplanten Ort ist oder weil der Empfänger nicht mehr die Zustellung am mobilen Logistikziel wünscht.

Ausführungsbeispiele schaffen ferner ein Verfahren für ein Mobilgerät. Das Verfahren umfasst Erhalten einer Berechtigungsanfrage zum Öffnen eines mobilen Logistikziels zur Lieferzeit. Die Berechtigungsanfrage basiert auf Information über eine Lieferanfrage und auf Information über einen voraussichtlichen Lieferzeitraum der Lieferung. Das Verfahren umfasst ferner Bereitstellen einer Benachrichtigung über die Berechtigungsanfrage für einen Nutzer des Mobilgeräts über ein Ausgabemodul. Das Verfahren umfasst ferner Erhalten einer Information über eine Antwort des Nutzers des Mobilgeräts auf die Benachrichtigung über die Berechtigungsanfrage von einem Eingabemodul. Die Antwort zeigt an, ob der Nutzer der Berechtigungsanfrage zustimmt oder nicht. Das Verfahren umfasst ferner Bestimmen von Information über eine Berechtigung zum Öffnen des mobilen Logistikziels während des voraussichtlichen Lieferzeitraums basierend auf der Berechtigungsanfrage und basierend auf der Information über die Antwort. Das Verfahren umfasst ferner Bereitstellen der Information über die Berechtigung. Das Beantworten der Berechtigungsanfrage durch das Mobilgerät des Empfängers ermöglicht das explizite Ausstellen einer Berechtigung eines Zugangs zum mobilen Logistikziels, was eine Übertragung der Verantwortung zum Empfänger ermöglicht.

In manchen Ausführungsbeispielen kann das Ausgabemodul einem Bildschirm und das Eingabemodul einem berührungsempfindlichen Sensor entsprechen. Die Antwort kann einer Position eines Schiebereglers in einer visuellen Darstellung des Schiebereglers entsprechen. Die Nutzung des Bildschirms ermöglicht eine komfortable Darstellung einer Vielzahl von Informationen. Die Nutzung des berührungsempfindlichen Sensors ermöglicht eine genaue und intuitive Bedienung. Alternativ oder zusätzlich kann das Eingabemodul ein Mikrofon umfassen. Die Information über die Antwort kann eine Aufnahme eines Sprachbefehls umfassen. Alternativ oder zusätzlich kann das Eingabemodul einen Bewegungssensor umfassen. Die Information über die Antwort kann einer vorgegebenen Bewegung des Bewegungssensors entsprechen. Eine Nutzung von unterschiedlichen Eingabemodulen kann eine Anpassung der Eingabe an eine Situation des Empfängers ermöglichen.

In einigen Ausführungsbeispielen umfasst die Benachrichtigung über die Berechtigungsanfrage ferner eine Benachrichtigung über eine Authentifizierungsanfrage für den Nutzer. Die Information über die Antwort umfasst beispielsweise ferner Information über eine Authentifizierung des Nutzers. Das Bestimmen der Information über die Berechtigung kann ferner auf der Authentifizierung des Nutzers basieren. Eine Authentifizierung des Benutzers, etwa über ein Passwort, einen Fingerabdruck-Scan oder einen Retina-Scan, kann eine Sicherheit der Transaktion weiter erhöhen.

In zumindest manchen Ausführungsbeispielen umfasst das Verfahren ferner Erhalten von Information über einen Widerruf der Berechtigung von dem Eingabemodul. Die Information über den Widerruf kann anzeigen, dass der Nutzer die Berechtigung zum Öffnen des mobilen Logistikziels während des voraussichtlichen Lieferzeitraums widerruft. Das Verfahren kann ferner ein Bereitstellen der Information über den Widerruf der Berechtigung umfassen. Die Möglichkeit des Widerrufs ermöglicht einen Abbruch des Zustellversuchs durch den Empfänger, etwa wenn das mobile Logistikziel nicht am geplanten Ort ist oder weil der Empfänger nicht mehr die Zustellung am mobilen Logistikziel wünscht.

Ausführungsbeispiele schaffen ferner ein Programm mit einem Programmcode zum Durchführen zumindest eines der Verfahren, wenn der Programmcode auf einem Computer, einem Prozessor, einem Kontrollmodul oder einer programmierbaren Hardwarekomponente ausgeführt wird.

Ausführungsbeispiele schaffen ferner eine Vorrichtung für eine Zentralstelle zum Bereitstellen eines Schlosssteuerungssignals für ein mobiles Logistikziel. Die Vorrichtung umfasst zumindest eine Schnittstelle, ausgebildet zur Kommunikation mit einem Mobilgerät eines Empfängers einer Lieferung, zur Kommunikation mit dem mobilen Logistikziel, und zur Kommunikation mit einem Mobilgerät eines Zustellers der Lieferung. Die Vorrichtung umfasst ferner ein Kontrollmodul, ausgebildet zum Erhalten von Information über eine Lieferanfrage über die zumindest eine Schnittstelle. Die Information über die Lieferanfrage umfasst Information über einen voraussichtlichen Lieferzeitraum der Lieferung. Das Kontrollmodul ist ferner ausgebildet zum Bereitstellen einer Berechtigungsanfrage zum Öffnen des mobilen Logistikziels während eines Lieferzeitraums für das Mobilgerät des Empfängers der Lieferung über die zumindest eine Schnittstelle basierend auf der Information über die Lieferanfrage und der Information über den voraussichtlichen Lieferzeitraum. Das Kontrollmodul ist ferner ausgebildet zum Erhalten von Information über eine Berechtigung zum Öffnen des mobilen Logistikziels während des voraussichtlichen Lieferzeitraums von dem Mobilgerät über die zumindest eine Schnittstelle. Das Kontrollmodul ist ferner ausgebildet zum Erhalten von Information über eine Schlossanfrage und von Zusteller-Standortinformation von dem Mobilgerät des Zustellers der Lieferung über die zumindest eine Schnittstelle. Das Kontrollmodul ist ferner ausgebildet zum Erhalten von Logistikziel-Standortinformation von dem Logistikziel über die zumindest eine Schnittstelle. Das Kontrollmodul ist ferner ausgebildet zum Bestimmen einer Zusteller-Berechtigung zum Öffnen des mobilen Logistikziels basierend auf der Information über die Schlossanfrage und basierend auf der Information über die Berechtigung. Das Kontrollmodul ist ferner ausgebildet zum Berechnen einer Zusteller-Standort-Differenz zwischen der Logistikziel-Standortinformation und der Zusteller-Standortinformation. Das Kontrollmodul ist ferner ausgebildet zum Vergleichen eines Zeitstempels der Schlossanfrage mit dem voraussichtlichen Lieferzeitraum. Das Kontrollmodul ist ferner ausgebildet zum Bestimmen des Schlosssteuerungssignals für das mobile Logistikziel basierend auf der Berechtigung des Zustellers, basierend auf der Zusteller-Standort-Differenz und basierend auf dem Vergleichen des Zeitstempels mit dem voraussichtlichen Lieferzeitraum. Das Kontrollmodul ist ferner ausgebildet zum Bereitstellen des Schlosssteuerungssignals für das mobile Logistikziel über die zumindest eine Schnittstelle, falls der Zusteller berechtigt zum Öffnen des mobilen Logistikziels ist, falls die Zusteller-Standort-Differenz einer Distanz-Bedingung genügt und falls der Zeitstempel innerhalb des voraussichtlichen Lieferzeitraums liegt.

Ausführungsbeispiele schaffen ferner eine Vorrichtung für ein Mobilgerät. Die Vorrichtung umfasst zumindest eine Schnittstelle, ausgebildet zur Kommunikation mit einer Zentralstelle. Die Vorrichtung umfasst ferner ein Kontrollmodul, ausgebildet zum Erhalten einer Berechtigungsanfrage zum Öffnen eines mobilen Logistikziels während eines Lieferzeitraums über die zumindest eine Schnittstelle. Die Berechtigungsanfrage basiert auf Information über eine Lieferanfrage und auf Information über einen voraussichtlichen Lieferzeitraum der Lieferung. Das Kontrollmodul ist ferner ausgebildet zum Bereitstellen einer Benachrichtigung über die Berechtigungsanfrage für einen Nutzer des Mobilgeräts über ein Ausgabemodul. Das Kontrollmodul ist ferner ausgebildet zum Erhalten einer Information über eine Antwort des Nutzers des Mobilgeräts auf die Benachrichtigung über die Berechtigungsanfrage von einem Eingabemodul. Die Antwort zeigt an, ob der Nutzer der Berechtigungsanfrage zustimmt oder nicht. Das Kontrollmodul ist ferner ausgebildet zum Bestimmen von Information über eine Berechtigung zum Öffnen des mobilen Logistikziels während des voraussichtlichen Lieferzeitraums basierend auf der Berechtigungsanfrage und basierend auf der Information über die Antwort. Das Kontrollmodul ist ferner ausgebildet zum Bereitstellen der Information über die Berechtigung über die zumindest eine Schnittstelle.

Ausführungsbeispiele schaffen ferner ein Mobilgerät umfassend die Vorrichtung für das Mobilgerät. Ausführungsbeispiele schaffen ferner die Zentralstelle umfassend die Vorrichtung für die Zentralstelle. Ausführungsbeispiele schaffen ferner ein System, umfassend die Zentralstelle mit der Vorrichtung für die Zentralstelle und ein Mobilgerät umfassend die Vorrichtung für das Mobilgerät. Das System kann ferner das mobile Logistikziel und/oder das Mobilgerät des Zustellers umfassen.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Flussdiagramm eines Ausführungsbeispiels eines Verfahrens zum Bereitstellen eines Schlosssteuerungssignals für ein mobiles Logistikziel;
- Fig. 1a: illustriert ein Blockdiagramm eines Ausführungsbeispiels einer Vorrichtung zum Bereitstellen eines Schlosssteuerungssignals für ein mobiles Logistikziel;
- Fig. 2: zeigt ein Beispiel einer Verknüpfung eines Fahrzeugs mit einer Applikation auf einem Mobiltelefon;
- Fig. 3: zeigt ein beispielhaftes Ausführungsbeispiel;
- Fig. 4: illustriert ein Flussdiagramm eines Ausführungsbeispiels eines Verfahrens für ein Mobilgerät; und
- Fig. 4a: illustriert ein Blockdiagramm eines Ausführungsbeispiels einer Vorrichtung für das Mobilgerät.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

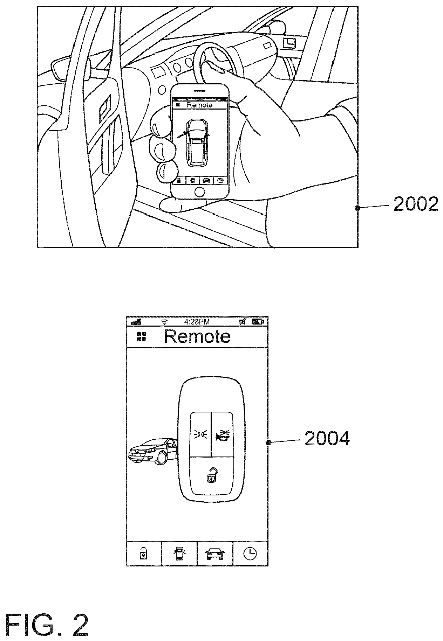

Mit der Verknüpfung von Automobilen mit dem Mobilfunknetz und dem Internet ist es möglich, Fahrzeugfunktionen aus der Ferne über mobile Applikationen auszulösen bzw. zu steuern. Mit diesen Fernzugriffen auf Fahrzeugfunktionen werden zahlreiche neue Dienstleistungsangebote möglich. Eine solche Funktion ist in Ausführungsbeispielen eine Fern-, Ent- und Verriegelung von Türen, Klappen und Deckeln eines vernetzten Fahrzeugs, zum Beispiel zum Zwecke von Lieferungen/Abholungen in den Kofferraum. Fig. 2 zeigt illustrativ Beispiele. 2002 zeigt beispielhaft eine Applikation für ein Mobiltelefon, mit der angezeigt werden kann, ob Türen eines Fahrzeugs geöffnet sind. Die Applikation kann es beispielsweise ferner ermöglichen, die Türen zu öffnen, eine Warnblinkfunktionalität auszulösen oder eine Hupe zu betätigen, wie in 2004 gezeigt. Dazu kann beispielsweise einem Dritten ein einmaliger, zeitlich und räumlich eingeschränkter Zugang zum Innenraum des Fahrzeugs ermöglicht werden.

Eine Fernentriegelung eines Fahrzeugs kann beispielsweise auf Basis einer mobilen Online-Dienst-Funktion "Tür Entriegeln" erfolgen, eine Verriegelung entsprechend mit Hilfe der Funktion "Tür Verriegeln". Diese Funktionen stehen Kunden von Fahrzeugen mit Mobilen Online Diensten zumindest teilweise zur Verfügung. Über eine entsprechende mobile Applikation kann ein als Hauptnutzer des Fahrzeugs eingetragener Kunde diese Funktion distanzunabhängig ausführen. Die Anfrage für die Entriegelung des Fahrzeugs wird dabei durch den Kunden über eine mobile Applikation an eine Zentraleinheit gesendet, welche direkt nach einer Legitimationsprüfung einen verschlüsselten Steuerungsbefehl an ein Empfangsmodul des assoziierten Fahrzeugs absetzt. Die Fahrzeugelektronik setzt diesen verschlüsselten Befehl in das jeweilige Steuerungssignal um. Die Öffnung und Schließung erfolgt jeweils in der Verantwortung des Kunden.

Soll zum Zweck einer Waren- oder Paketzustellung das Fahrzeug für einen Dritten (z.B. den Paketzusteller) geöffnet werden, so müsste der Fahrzeugbesitzer bei der Ankunft des Zustellers am Fahrzeug, die Entriegelung des Fahrzeugs über die mobile Applikation selbst auslösen. Da dies voraussichtlich zu Wartezeiten für den Zusteller führen würde, ist dieser Prozess wenig alltagstauglich und bietet wenig Verbesserung gegenüber einem Zustellversuch an die Hausadresse eines Kunden.

Ferner bestehen häufig keine Vertragsbeziehungen zwischen Betreibern von Online-Diensten für Fahrzeuge (z.B. Herstellern) und Logistikunternehmen. So sind die Fahrzeughersteller häufig nicht autorisiert, eine automatisierte und sendungsunabhängige Fern-Entriegelung des Fahrzeugs durchzuführen. Die Weitergabe von Standortdaten eines Fahrzeugs zum Zweck einer Zustellung kann ohne eine entsprechende Autorisierung durch den Fahrzeughalter ebenfalls nicht möglich sein.

Vor dem Hintergrund der beschriebenen Problematik wird ein Verfahren beschrieben, bei dem in zumindest manchen Ausführungsbeispielen ein assoziierter Fahrzeug-(Haupt-)nutzer an die Zentraleinheit eine Entriegelungsanweisung erteilt, welche für einen in der Zukunft liegenden Liefervorgang gültig ist und nur unter Erfüllung bestimmter Bedingungen zu einer tatsächlichen Entriegelung des Fahrzeugs führt. Im Mittelpunkt des Verfahrens steht eine Berechtigungsanfrage für den Nutzer und eine Berechtigungserteilung durch den Nutzer, in manchen Ausführungsbeispielen umfasst das Verfahren auch eine temporäre eingeschränkte Positionsangabe des Fahrzeugs an einen Dritten sowie eine optionale Aktivierung der Warnblinkanlage.

In einem beispielhaften Ausführungsbeispiel wird zunächst angenommen, dass es sich bei Bestellkunde und Fahrzeugnutzer um dieselbe Person handelt. Der Kunde bestellt eine Ware bei einem Händler und gibt als Lieferwunsch-Adresse sein Fahrzeug an. Als Lieferadresse kann beispielsweise der voraussichtliche Aufenthaltsort des Fahrzeugs am Tag der Lieferung genannt werden. Der voraussichtliche Tag der Lieferung wird vom Händler bereitgestellt, beispielsweise nach Abfrage einer Schnittstelle eines Logistikdienstleisters.

Dieser erste Datensatz des Kunden beinhaltet beispielsweise:
a. Name des Bestellkunden
b. Fahrzeug-Kennung des zu beliefernden Fahrzeugs (Kennzeichen und/oder Fahrzeug ID)
c. Aufenthaltsort des Fahrzeugs als postalische Adresse (Straße und/oder Postleitzahl)
d. Zeitfenster (z.B. 13.7.2015, 12.00 bis 15.00Uhr), zu dem sich das Fahrzeug am angegebenen Aufenthaltsort (siehe c.) befinden wird

Es erfolgt beispielhaft ein Lieferauftrag des Händlers an einen Logistikdienstleister. Dabei wird durch den Händler ein zweiter Datensatz erzeugt, der in einer Information über eine Lieferanfrage umfasst sein kann, der folgende Angaben umfassen kann:
a. Bestellnummer
b. Angaben aus dem ersten Datensatz

Dabei steht der Logistikdienstleister beispielhaft in keiner Vertragsbeziehung mit der Hersteller des Fahrzeugs. Zwischen Logistikdienstleister und dem Empfänger-Kunden sind Vertragsbeziehungen z.B. in Form eines Ablageauftrages für den Logistikdienstleister möglich.

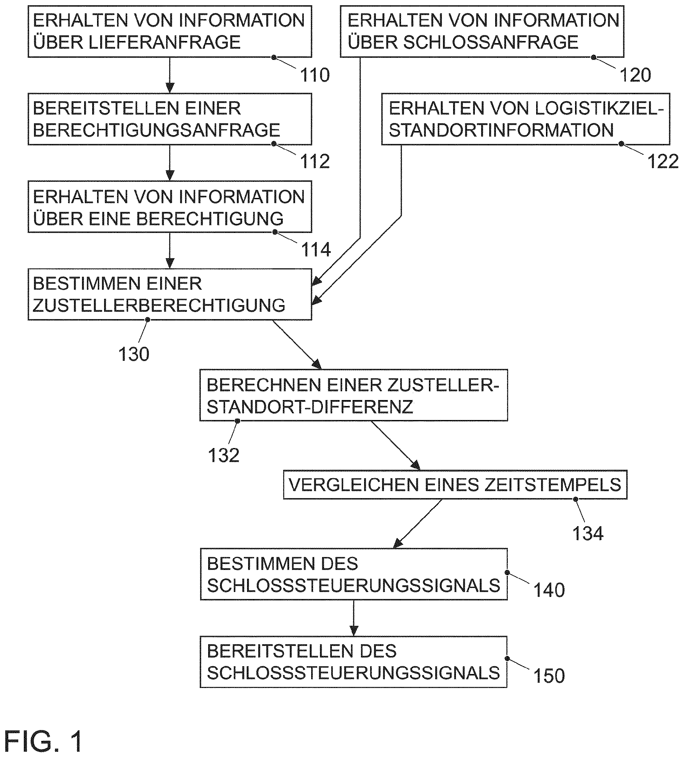

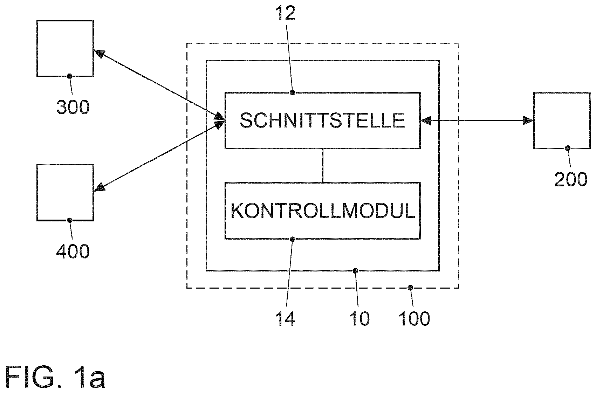

Auf Basis dieses Lieferauftrags kann der Logistikdienstleister eine Zugriffsvoranfrage (oder Information über eine Schlossanfrage) über eine Schnittstelle der Zentraleinheit bereitstellen. Die Zentraleinheit kann beispielsweise einer Zentraleinheit 100 aus Fig. 1 entsprechen. Dazu wird beispielhaft ein dritter Datensatz erzeugt, bestehend aus:
a. Sendungsnummer
b. Angaben aus dem zweiten Datensatz

Die Zentraleinheit kann auf Basis dieser Schlossanfrage eine Berechtigungsanfrage bereitstellen, welche an den assoziierten Fahrzeug-Hauptnutzer gesendet wird. Dabei kann die enthaltene Sendungsnummer (umfasst in der Information über die Lieferanfrage) dem Nutzer helfen, die Sendung zu identifizieren. Der Nutzer kann gebeten werden, sein Fahrzeug zum Zweck der Zustellung der spezifizierten Sendung verzögert zu entriegeln und beispielsweise weitere Zugriffe (Fahrzeug-Ortung, Blinken, Verriegeln) auf das Fahrzeug zuzulassen.

Der Empfänger kann die Berechtigungsfrage beispielsweise auf einem Mobilgerät, etwa einer mobilen Applikation (auch engl. Application, App) auf einem Smartphone erhalten, etwa zusammen mit Information über die von ihm gewünschte Lieferung in sein Fahrzeug. Die Daten der Anfrage können mit seinen, bei der Bestellung angegebenen, Daten (erster Datensatz) übereinstimmen, und beispielsweise die Fahrzeug-Kennung, den Tag der Lieferung, das Zeitfenster, die Postleitzahl, die Straße und/oder ggf. die Hausnummer umfassen. Optional kann eine Sendungsnummer umfasst sein, welche durch den Händler bzw. den Logistikdienstleister vergeben wurden und die Lieferung identifizieren kann.

Innerhalb dieser mobilen Applikation kann der Fahrzeug-Hauptnutzer nun eine "verzögerte Fernentriegelung" auslösen, beispielsweise indem er ein grafisches Schiebeelement auf den Zustand "Fahrzeug entriegeln" bewegt. Dieses Umsetzen des Schiebeelementes von "Fahrzeug nicht entriegeln" auf "Fahrzeug entriegeln (am TT.MM.JJ)" kann durch einen weiteren Sicherheitsmechanismus, wie z.B. die Abfrage einer PIN, Abfrage eines Fingerabdruck-Scans oder eines Retina-Scans begleitet sein.

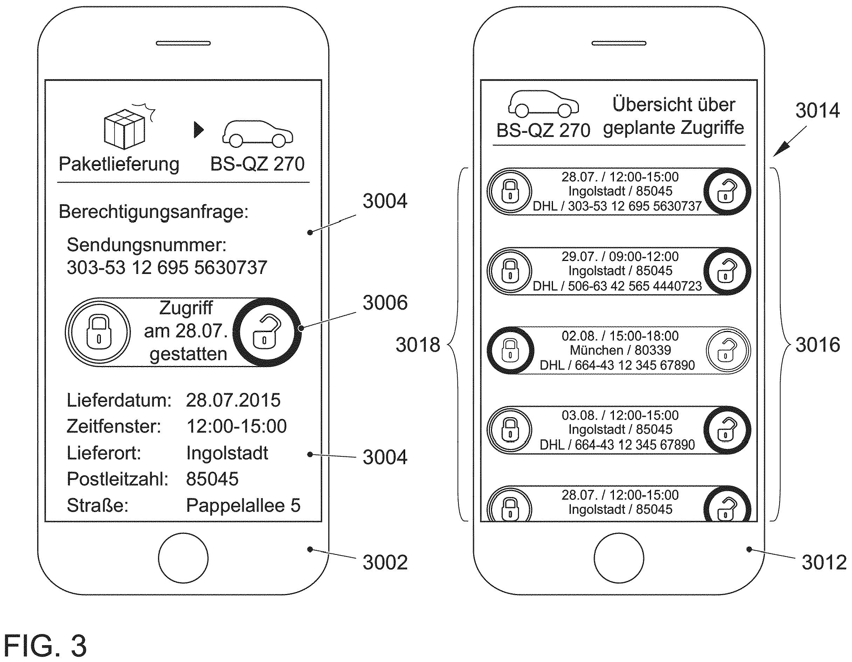

Fig. 3 zeigt ein beispielhaftes Ausführungsbeispiel. 3002 zeigt eine Anzeige der Berechtigungsanfrage, die Information über die Lieferanfrage 3004 und einen Schieberegler 3006 zur Erteilung der Berechtigung umfasst. Die Information über die Lieferanfrage 3004 umfasst dabei beispielhaft die Sendungsnummer, das Datum, die Uhrzeit der Lieferung, für die die Berechtigung erteilt werden soll, den Lieferort, die Postleitzahl und die Adresse. Fig. 3 3012 zeigt eine Übersicht von Lieferungen / geplanten Zugriffen 3014 auf das Fahrzeug mit der Information über die Lieferanfrage, mit einer visuellen Indikation, ob die Berechtigung erteilt wurde 3016 oder nicht 3018.

Durch dieses aktive Bewegen des Schiebeelementes kann der Fahrzeug-Hauptnutzer beispielhaft die Berechtigung Lieferung erteilen und dem Hersteller explizit den Auftrag für die Ausführung der Entriegelungsfunktion bzw. die Weiterleitung von fahrzeugbezogenen Daten, etwa wenn folgende Rahmenbedingungen erfüllt sind, erteilen. Diese Rahmenbedingungen können beispielsweise auf dem dritten Datensatz basieren.

Die Zustimmung des Kunden kann als Information über die Berechtigung in der Zentralstelle gespeichert werden. Ein entsprechender vierter Datensatz kann beispielsweise die
a. Zustimmung des Kunden
b. Angaben aus dem dritten Datensatz
umfassen oder auf diese verweisen. Der Zusteller kann über die Zustimmung des Kunden informiert werden und in manchen Ausführungsbeispielen den vierten Datensatz zumindest teilweise erhalten.

In zumindest manchen Ausführungsbeispielen kann die Berechtigung vom Kunden wiederrufen oder angepasst werden. Der Widerruf oder die Anpassungen können über die mobile Applikation oder beispielsweise eine Web-Portal erfolgen. Bei der Anpassung können beispielsweise Zeitfenster und Fahrzeugadresse geändert werden.

Am Tag der Lieferung kann der Zusteller über sein mobiles Endgerät und der Zentraleinheit des Logistikunternehmens, mit der Zentraleinheit kommunizieren und die entsprechenden Informationen und Funktionen für das assoziierte Fahrzeug anfragen. Dabei müssen in zumindest manchen Ausführungsbeispielen die im vierten Datensatz genannten mit dem Zulieferer vereinbarten und vom Kunden bestätigten Voraussetzungen erfüllt sein. Dies sind beispielhaft
a. die Entriegelung findet zum vereinbarten Datum statt
b. die Entriegelung findet innerhalb des vereinbarten Zeitfensters statt
c. Das Fahrzeug befindet sich innerhalb des vereinbarten Postleitzahlenbereichs bzw. innerhalb einer zulässigen Radius (z.B. 1 km)
d. Der Zusteller befindet sich nachweislich in der Nähe des Fahrzeugs

Nach erfolgreich abgeschlossener Lieferung kann die erteilte Berechtigung beispielsweise erlöschen und es können keine weiteren Informationen abgefragt werden.

Fig. 1 illustriert ein Flussdiagramm eines Ausführungsbeispiels eines Verfahrens für eine Zentralstelle 100 zum Bereitstellen eines Schlosssteuerungssignals für ein mobiles Logistikziel 300. Fig. 1a illustriert ein Blockdiagramm eines Ausführungsbeispiels einer Vorrichtung 10 für die Zentralstelle 100, die ausgebildet ist, das Verfahren auszuführen. In zumindest einigen Ausführungsbeispielen befinden sich die Zentralstelle und/oder die Vorrichtung 10 außerhalb des Logistikziels 300 und sind ausgebildet, mit dem mobilen Logistikziel über ein Funknetzwerk zu kommunizieren. Die Vorrichtung 10 umfasst zumindest eine Schnittstelle 12, ausgebildet zur Kommunikation mit einem Mobilgerät 200 eines Empfängers einer Lieferung, zur Kommunikation mit dem mobilen Logistikziel 300, und zur Kommunikation mit einem Mobilgerät 400 eines Zustellers der Lieferung. Die Vorrichtung umfasst ferner ein Kontrollmodul 14, das mit der zumindest einen Schnittstelle gekoppelt ist, und das ausgebildet ist, die Verfahrensschritte, etwa Verfahrensschritte 110 - 150, auszuführen. Das Kontrollmodul 14 ist ausgebildet, die Kommunikation mit dem mobilen Logistikziel 300, mit dem Mobilgerät 400 und dem mobilgerät 200 über die zumindest eine Schnittstelle durchzuführen, beispielsweise in den Verfahrensschritten 110, 112, 114, 120, 122 und 150.

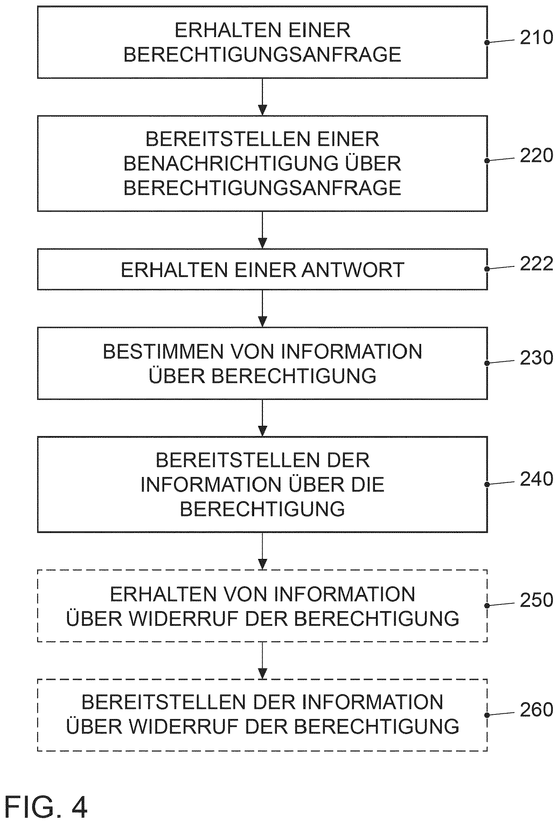

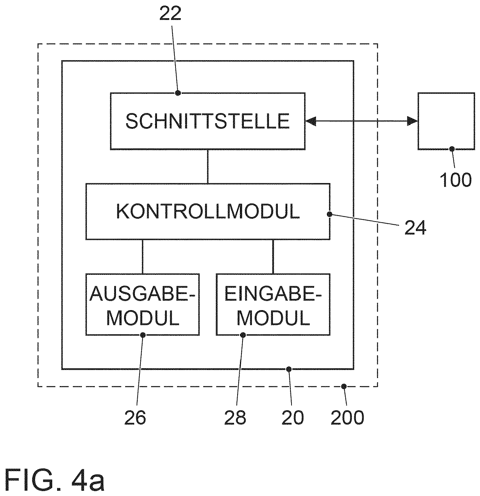

Die zumindest eine Schnittstelle 12, und/oder zumindest eine Schnittstelle 22 aus Fig. 4a, kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. In zumindest manchen Ausführungsbeispielen kann die Zentralstelle 100 ausgebildet sein, über die Schnittstelle 12 über das Funknetzwerk, das beispielsweise einem zellulären Mobilfunksystem entsprechen kann, mit dem Mobilgerät 200, dem Logistikziel 300 und/oder dem Mobilgerät 400 zu kommunizieren. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz, mobiles Kommunikationssystem und Mobilfunknetzwerk synonym benutzt.

In Ausführungsbeispielen kann die Kontrolleinrichtung bzw. das Kontrollmodul 14, und/oder ein Kontrollmodul 24 aus Fig. 4a, einem beliebigen Controller oder Prozessor oder einer programmierbaren Hardwarekomponente entsprechen. Beispielsweise kann das Kontrollmodul 14; 24 auch als Software realisiert sein, die für eine entsprechende Hardwarekomponente programmiert ist. Insofern kann das Kontrollmodul 14; 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14; 24 denkbar.

In zumindest einigen Ausführungsbeispielen kann die Zentralstelle 100 einer zentralen Steuerungseinrichtung, einer zentralen Berechnungsstelle, einem Server, eine Gruppe von Servern, oder einem verteilten Serverdienst entsprechen.

Das Schlosssteuerungssignal kann beispielsweise einem digitalen Signal entsprechen, basierend auf Datenpaketen und/oder basierend auf einem Leitungsvermittlungs-Verfahren, und kann Steuerungsinformationen über das Entriegeln, Verriegeln und/oder Anfragen eines Verriegelungsstatus umfassen. In einigen Ausführungsbeispielen kann das Schlosssteuerungssignal auf einer Verschlüsselung und/oder einer digitalen Signatur zur Authentifizierung gegenüber dem mobilen Logistikziel 300 basieren. Das Schlosssteuerungssignal kann zumindest ein Element der Gruppe von Information über das Entsperren eines Schlosses des mobilen Logistikziels 300, Information über das Sperren des Schlosses des mobilen Logistikziels 300, und/oder Information über die Kontrolle des Schlosses des mobilen Logistikziels 300 umfassen.

In zumindest manchen Ausführungsbeispielen kann das mobile Logistikziel 300 einem Fahrzeug, einem Kofferraum eines Fahrzeugs oder einem mobilen Logistikdepot entsprechen. In zumindest manchen Ausführungsbeispielen kann das Fahrzeug beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Das Verfahren umfasst Erhalten 110 von Information über eine Lieferanfrage. Die Information über die Lieferanfrage umfasst Information über einen voraussichtlichen Lieferzeitraum einer Lieferung.

In einigen Ausführungsbeispielen kann die Information über die Lieferanfrage von einem Verkaufssystem oder einem Logistikdienstleister bereitgestellt werden. In zumindest manchen Ausführungsbeispielen kann die Information über die Lieferanfrage ferner zumindest ein Element der Gruppe von Information über den Lieferinhalt, Information über einen Empfänger, Information über eine Lieferkennung, Information über ein Liefergebiet, Information über eine Lieferadresse und Information über einen Versender umfassen.

Das Verfahren umfasst ferner Bereitstellen 112 einer Berechtigungsanfrage zum Öffnen des mobilen Logistikziels während eines Lieferzeitraums für das Mobilgerät 200 des Empfängers der Lieferung, basierend auf der Information über die Lieferanfrage und der Information über den voraussichtlichen Lieferzeitraum. In zumindest manchen Ausführungsbeispielen kann die Berechtigungsanfrage die Information über die Lieferanfrage und die Information über den voraussichtlichen Lieferzeitraum umfassen. Die Berechtigungsanfrage kann ferner Information über die Lieferung, beispielsweise Information über einen Versender, einen Lieferinhalt, eine Lieferkennung eine Zieladresse oder ein Zielgebiet umfassen. In zumindest manchen Ausführungsbeispielen kann die Berechtigungsanfrage einem oder mehreren Datenpaketen, die verschlüsselt und/oder digital signiert sein können, entsprechen.

Das Verfahren umfasst ferner Erhalten 114 von Information über eine Berechtigung zum Öffnen des mobilen Logistikziels während des voraussichtlichen Lieferzeitraums von dem Mobilgerät 200. Das Erhalten 114 kann beispielsweise eine Reaktion auf das Bereitstellen 112 der Berechtigungsanfrage sein. Die Information über die Berechtigung kann beispielsweise ferner Information über die Lieferkennung, Information über den Empfänger und/oder Information über den voraussichtlichen Lieferzeitraum, für den die Berechtigung erteilt wurde, umfassen. In zumindest manchen Ausführungsbeispielen kann die Information über die Berechtigung einem oder mehreren Datenpaketen, die verschlüsselt und/oder digital signiert sein können, entsprechen.

Das Verfahren umfasst ferner Erhalten 120 von Information über eine Schlossanfrage und von Zusteller-Standortinformation von dem Mobilgerät 400 des Zustellers der Lieferung. Die Zusteller-Standortinformation kann den Standort des mobilen Logistikziels zu umfassen. In zumindest manchen Ausführungsbeispielen kann die Information über die Schlossanfrage auf der Information über die Lieferanfrage basieren und kann einen Authentifizierungskode umfassen, der mit einem Auftrag, beispielsweise der Lieferanfrage assoziiert werden kann. In einigen Ausführungsbeispielen kann die Information über die Schlossanfrage eine digitale Signatur umfassen. In zumindest manchen Ausführungsbeispielen kann die Information über die Schlossanfrage eine Entriegelanfrage oder eine Verriegelanfrage umfassen.

In zumindest manchen Ausführungsbeispielen kann das Erhalten 114 der Information über die Berechtigung vor dem Erhalten 120 der Information über der Schlossanfrage stattfinden. Beispielsweise kann die Information über die Berechtigung sich auf einen voraussichtlichen Lieferzeitraum beziehen, der sich in der Zukunft befindet. Das Erhalten 120 kann beispielsweise auf den voraussichtlichen Lieferzeitraum eingeschränkt sein. Beispielsweise kann das Erhalten 120 während des voraussichtlichen Lieferzeitraums stattfinden; stellt das Mobilgerät 400 die Information über die Schlossanfrage zu einem anderen Zeitpunkt bereit, so kann das Kontrollmodul 14 ausgebildet sein, die Information über die Schlossanfrage abzulehnen oder mit einer negativen Rückmeldung anzunehmen.

Das Verfahren umfasst ferner Erhalten 122 von Logistikziel-Standortinformation von dem mobilen Logistikziel 300. In zumindest manchen Ausführungsbeispielen kann die Logistikziel-Standortinformation den Standort des mobilen Logistikziels umfassen. Die Logistikziel-Standortinformation und die Zusteller-Standortinformation können beispielsweise GPS-Koordinaten oder geographische Koordinaten umfassen und auf einem Globalen Positionierungs-System (GPS) und/oder auf einer Lokalisierung über Mobilfunkdaten basieren.

Das Verfahren umfasst ferner Bestimmen 130 einer Zusteller-Berechtigung zum Öffnen des mobilen Logistikziels 300 basierend auf der Information über die Schlossanfrage und basierend auf der Information über die Berechtigung. Das Bestimmen 130 kann beispielsweise ein Überprüfen umfassen, ob für die Lieferung, auf die sich die Schlossanfrage bezieht, eine Berechtigung des Empfängers vorliegt, oder ob für das mobile Logistikziel 300 eine Lieferanfrage vorliegt. In zumindest manchen Ausführungsbeispielen kann die Lieferanfrage ferner einen Information über einen Lieferort, etwa einen Postleitzahlenbereich oder eine Adresse umfassen, und das Bestimmen 130 kann ferner ein Berechnen, ob die Logistikziel-Standortinformation innerhalb des Lieferorts oder innerhalb eines Radius um den Lieferort liegt, umfassen.

Das Verfahren umfasst ferner Berechnen 132 einer Zusteller-Standort-Differenz zwischen der Logistikziel-Standortinformation und der Zusteller-Standortinformation. Die Zusteller-Standort-Differenz kann beispielsweise einer räumlichen Differenz zwischen der Zusteller-Standortinformation und der Logistikziel-Standortinformation entsprechen, beispielsweise einem räumlichen Abstand zwischen den Standortinformationen. Das Berechnen 132 kann beispielsweise auf einer trigonometrischen Funktion basieren, oder kann etwa auf einer digitalen Straßenkarte basieren, wobei die Zusteller-Standort-Differenz einer Wegstrecke zwischen mobilem Logistikziel 200 und Mobilgerät des Zustellers 400 entsprechen kann.

In manchen Ausführungsbeispielen kann die Zusteller-Standortinformation Koordinaten eines Satelliten-basierten Positionierungssystems entsprechen. Das Berechnen 132 der Zusteller-Standort-Differenz kann beispielsweise auf einem Vergleich der Koordinaten der Zusteller-Standortinformation mit Koordinaten der Lieferziel-Standortinformation basieren.

Das Verfahren umfasst ferner Vergleichen 134 eines Zeitstempels der Schlossanfrage mit dem voraussichtlichen Lieferzeitraum. Das Vergleichen 134 des Zeitstempels kann beispielsweise ein Überprüfen umfassen, ob der Zeitstempel der Schlossanfrage innerhalb des voraussichtlichen Lieferzeitraums liegt, oder innerhalb einer Kulanzzeit um den voraussichtlichen Lieferzeitraum. In zumindest manchen Ausführungsbeispielen kann der Zeitstempel in der Information über die Schlossanfrage umfasst sein. Alternativ oder zusätzlich kann der Zeitstempel auf einem Zeitpunkt des Erhaltens 120 basieren oder diesem entsprechen.

Das Verfahren umfasst ferner Bestimmen 140 des Schlosssteuerungssignals für das mobile Logistikziel 300 basierend auf der Zusteller-Berechtigung, basierend auf der Zusteller-Standort-Differenz und basierend auf dem Vergleichen 124 des Zeitstempels mit dem voraussichtlichen Lieferzeitraum. In zumindest manchen Ausführungsbeispielen kann das Bestimmen 140 ein Überprüfen umfassen, ob das Bestimmen 130 ergibt, dass die Zusteller-Berechtigung vorliegt, ob das Berechnen 132 ergibt, dass die Zusteller-Standort-Differenz unter einem Schwellenwert liegt (beispielsweise 2m, 5m, 10m, 15m, 20m oder 25m) und/oder dass der Zeitstempel innerhalb der voraussichtlichen Lieferzeit liegt. Das Bestimmen 140 kann ferner das Berechnen und/oder Verschlüsseln eines Datenpakets umfassen, das Anweisungen enthält, ein Schloss des mobilen Logistikziels 300 einmalig zu entriegeln oder verriegeln.

Das Verfahren umfasst ferner Bereitstellen 150 des Schlosssteuerungssignals für das mobile Logistikziel 300, falls der Zusteller zum Öffnen des mobilen Logistikziels berechtigt ist, falls die Zusteller-Standort-Differenz einer Distanz-Bedingung genügt und falls der Zeitstempel innerhalb des voraussichtlichen Lieferzeitraums liegt. Die Distanz-Bedingung kann beispielsweise einem Distanz-Schwellenwert entsprechen, beispielsweise 2m, 5m, 10m, 15m, 20m oder 25m, basierend auf einer geometrischen Distanz oder einer Wegdistanz, oder dass sich das Mobilgerät 400 des Zustellers in der gleichen Straße befindet wie das mobile Logistikziel 300 befindet und/oder dass das Mobilgerät 400 in Sichtweite des mobilen Logistikziels 300 ist.

In manchen Ausführungsbeispielen kann das Verfahren ferner ein Erhalten von Information über die Aktivierung einer Fahrzeugfunktion von dem Mobilgerät 400 umfassen. Die Fahrzeugfunktion kann beispielsweise die Aktivierung einer Warnblinkanlage umfassen. Das Verfahren kann ferner ein Bestimmen eines Steuersignals für das mobile Logistikziel umfassen, zum Steuern der Fahrzeugfunktion. Voraussetzung kann beispielsweise sein, dass ein Zeitstempel der Information über die Aktivierung der Fahrzeugfunktion innerhalb des voraussichtlichen Lieferzeitraums oder innerhalb einer Vorlaufzeit, beispielsweise 3h, 1 h, 30min oder 15min vor dem voraussichtlichen Lieferzeitraum, liegt. Weitere Voraussetzung kann sein, dass sich das Mobilgerät 400 des Zustellers innerhalb eines Radius um das mobile Logistikziel 300 befindet.

In manchen Ausführungsbeispielen kann das Verfahren ferner ein Bereitstellen der Logistikziel-Standortinformation für das Mobilgerät 400 des Zustellers umfassen, beispielsweise wenn sich das mobile Logistikziel und das Mobilgerät innerhalb eines Radius oder innerhalb eines spezifizierten geografischen Gebiets befinden, etwa einem Postleitzahlenbereich, einem Umkreis oder einer Straßen, und/oder wenn eine aktueller Zeitpunkt innerhalb der voraussichtlichen Lieferzeit oder innerhalb einer Vorlaufzeit vor der Lieferzeit liegt.

In manchen Ausführungsbeispielen kann das Verfahren ferner ein Erhalten von Information über einen Widerruf der Berechtigung von dem Mobilgerät 200 des Empfängers umfassen. Die Information über den Widerruf kann anzeigen, dass der Nutzer die Berechtigung zum Öffnen des mobilen Logistikziels während des voraussichtlichen Lieferzeitraums widerruft. Das Bestimmen 140 kann ferner auf der Information über den Widerruf basiert sein. Alternativ oder zusätzlich kann das Bereitstellen 150 nicht ausgeführt werden, wenn die Berechtigung durch die Information über den Widerruf wiederrufen ist. In zumindest manchen Ausführungsbeispielen kann die Information über den Widerruf der Berechtigung ferner Information über eine angepasste Berechtigung umfassen, die die vorherige Information über die Berechtigung ersetzt. Das Verfahren kann ferner Ersetzen der Information über die Berechtigung basierend auf der Information über die angepasste Berechtigung umfassen. Beispielsweise kann die Information über die angepasste Berechtigung einen angepassten Lieferort oder einen angepassten voraussichtlichen Lieferzeitraum umfassen.

Fig. 4 illustriert ein Flussdiagramm eines Ausführungsbeispiels eines Verfahrens für ein Mobilgerät 200. Fig. 4a illustriert ein Blockdiagramm eines Ausführungsbeispiels einer Vorrichtung 20 für das Mobilgerät 200, ausgebildet zum Ausführen des Verfahrens. Die Vorrichtung 20 umfasst die zumindest Schnittstelle 22, ausgebildet zur Kommunikation mit der Zentralstelle 100, und das Kontrollmodul 24, das mit der zumindest einen Schnittstelle 22 gekoppelt ist. Das Kontrollmodul 24 ist ausgebildet zum Ausführen der Verfahrensschritte, etwa der Verfahrensschritte 210-260. Das Mobilgerät 200, und/oder das Mobilgerät 400, kann beispielsweise einem portablen Rechnersystem entsprechen, beispielsweise einem Mobiltelefon, einem Smartphone, einer programmierbaren Uhr (auch engl. Smartwatch), einem Persönlichen Digitalen Assistenten (PDA), einem Tablet-Computer, einem mobilen Computer, einem Notebook-Computer, einem Laptop-Computer, oder einem mobilen Rechnersystem.

Das Verfahren umfasst Erhalten 210 einer Berechtigungsanfrage zum Öffnen eines mobilen Logistikziels 300 zur Lieferzeit. Die Berechtigungsanfrage basiert auf Information über eine Lieferanfrage und auf Information über einen voraussichtlichen Lieferzeitraum der Lieferung. Das Kontrollmodul 24 ist ausgebildet zum Erhalten 210 über die zumindest eine Schnittstelle 22. Das Erhalten 210 kann einem Erhalten der Berechtigungsanfrage von der Zentralstelle 100 entsprechen.

Das Verfahren umfasst ferner Bereitstellen 220 einer Benachrichtigung über die Berechtigungsanfrage für einen Nutzer des Mobilgeräts 200 über ein Ausgabemodul. Das Ausgabemodul, beispielsweise ein Ausgebemodul 26 der Vorrichtung 20, das mit dem Kontrollmodul 24 gekoppelt ist, kann beispielsweise einem Bildschirm, einem berührungsempfindlichen Bildschirm (auch engl. Touchscreen), einem Lautsprecher oder einem taktilen Ausgabemodul, beispielsweise auf Vibrations- oder Braillebasis, entsprechen. Die Benachrichtigung über die Berechtigungsanfrage kann beispielsweise einer Anzeige einer Übersicht (wie etwa in Fig. 3 3002 und 3004), einer sprachlichen Ausgabe eines Textes oder einer taktilen Repräsentation der Berechtigungsanfrage entsprechen, und kann beispielsweise Information über eine Lieferidentifikation, Information über den Lieferort, Information über den Lieferinhalt und/oder Information über den voraussichtlichen Lieferzeitraum umfassen.

Das Verfahren umfasst ferner Erhalten 222 einer Information über eine Antwort des Nutzers des Mobilgeräts auf die Benachrichtigung über die Berechtigungsanfrage von einem Eingabemodul. Die Antwort zeigt an, ob der Nutzer der Berechtigungsanfrage zustimmt oder nicht. Das Eingabemodul, beispielsweise eine Eingabemodul 28 der Vorrichtung 20, kann beispielsweise einem berührungsempfindlichen Sensor, einem Mikrofon oder einem Bewegungssensor entsprechen oder dieses umfassen. Beispielsweise kann die Information über die Antwort eine oder mehrere Positionen von Berührungen und/oder Berührungsfolgen umfassen, die mit grafischen Elementen der Anzeige des Ausgabemoduls 26 korrespondieren. Alternativ oder zusätzlich kann die Information über die Antwort eine Aufnahme gesprochenen Texts umfassen oder Information über eine Bewegungsgeste. Beispielsweise können das Ausgabemodul, etwa das Ausgabemodul 26 und/oder das Eingabemodul, etwa das Eingabemodul 28, in einem separaten Gerät umfasst sein, beispielsweise in einer Smartwatch, und ein Bestimmen 230 kann in einem Smartphone durchgeführt werden.

Beispielsweise kann das Ausgabemodul 26 einem Bildschirm und das Eingabemodul 28 einem berührungsempfindlichen Sensor entsprechen. Die Antwort kann beispielsweise einer Position eines Schiebereglers in einer visuellen Darstellung des Schiebereglers entsprechen, die ähnlich implementiert sein kann wie in Fig. 3 3002 und/oder 3004.

Alternativ oder zusätzlich kann das Eingabemodul ein Mikrofon umfassen. Die Information über die Antwort kann eine Aufnahme eines Sprachbefehls umfassen. Alternativ oder zusätzlich kann das Eingabemodul einen Bewegungssensor umfassen. Die Information über die Antwort kann einer vorgegebenen Bewegung des Bewegungssensors entsprechen, beispielsweise einer Berührungsgeste.

In manchen Ausführungsbeispielen kann es möglich sein, das Fahrzeug (das dem mobilen Logistikziel 300 entsprechen kann) auch ohne Schlüssel zu öffnen und zu starten. Eine Möglichkeit kann hierbei ein Schieberegler auf einem Handy sein. Hier sind auch andere Möglichkeiten denkbar, die den Willen des Nutzers erfassen. Manche Ausführungsbeispiele können es ermöglichen, dass der Befehl zum Entriegeln des Fahrzeugs in die Smartwatch gesprochen wird. Es ist auch denkbar, dass zum Entriegeln das Mobilgerät 200 (oder das Handgelenk) in einer gewissen Weise bewegt werden kann. Die Bedienhandlung kann dabei die Erfassung des Befehls mit der Identifizierung des Nutzers verbinden - der gesprochene Befehl könnte mit der biometrischen Erkennung des Nutzers in der Information über die Antwort gekoppelt werden.

In manchen Ausführungsbeispielen kann das Mobilgerät 200 ausgebildet sein, das mobile Logistikziel 300 basierend auf einer Bedienhandlung des Nutzers (des Empfängers) zu öffnen. Eine Bedienhandlung, die in der Information über die Antwort umfasst ist, kann beispielsweise der Bedienhandlung entsprechen, die der Empfänger ausführt, um das mobile Logistikziel 300 zu öffnen. Damit kann in Ausführungsbeispielen dem Empfänger verdeutlicht werden, dass die Übertragung der Berechtigung ähnlich schwerwiegend ist wie die direkte Ausführung des entsprechenden Befehls.

Das Verfahren umfasst ferner Bestimmen 230 der Information über die Berechtigung zum Öffnen des mobilen Logistikziels während des voraussichtlichen Lieferzeitraums basierend auf der Berechtigungsanfrage und basierend auf der Information über die Antwort. Das Bestimmen 230 kann beispielsweise ein zuordnen der Berührungen zu den korrespondieren grafischen Elementen umfassen, oder eine Erkennung von Sprachbefehlen im gesprochenen Text. Das Bestimmen 230 kann ferner ein Bereitstellen, Verschlüsseln und/oder signieren eines Datenpakets umfassen, das die Information über die Berechtigung umfasst.

In zumindest manchen Ausführungsbeispielen kann das Bestimmen 230 ferner ein Verarbeiten der Information über die Antwort umfassen, etwa basierend auf einer Sprachanalyse oder basierend auf einer Zuordnung von Punkten des berührungsempfindlichen Sensors oder kapazitiven Messungen des berührungsempfindlichen Sensors zu Bedienelemente einer grafischen Benutzeroberfläche, die beispielsweise auf dem Ausgabemodul 26 dargestellt werden kann. In zumindest manchen Ausführungsbeispielen kann das Bestimmen 230 ferner eine Signalanalyse umfassen, beispielsweise zur Transformation von kapazitiven Strömungen zu Bedieneingaben, von Tonaufnahmen zu erkannten Befehlen, und/oder von Bewegungsgesten oder taktilem Feedback zu Anweisungen des Nutzers.

In manchen Ausführungsbeispielen kann die Benachrichtigung über die Berechtigungsanfrage ferner eine Benachrichtigung über eine Authentifizierungsanfrage für den Nutzer umfassen. Beispielsweise kann die Benachrichtigung eine Handlungsinformation für den Empfänger umfassen, etwa eine Aufforderung zur Eingabe eines Passworts oder einer Pin, oder zum Auflegen eines Fingers auf einen Fingerabdruckscanner oder zum Scannen des Auges über einen Retina-Scanner. Die Information über die Antwort kann ferner Information über eine Authentifizierung des Nutzers umfassen. Die Authentifizierung kann beispielsweise einem Passwort, einer Pin, einem Sprachbefehl, einem Fingerabdruck-Scan oder einem Retina-Scan entsprechen. Beispielsweise kann die Vorrichtung ein Authentifizierungsmodul 29, etwa einen Fingerabdruckscanner oder Retinascanner, zum Authentifizieren umfassen. Das Bestimmen 230 der Information über die Berechtigung kann ferner auf der Authentifizierung des Nutzers basieren. Beispielsweise kann das Bestimmen 230 ein Überprüfen eines Passworts, einer Pin, eines Fingerabdruck-Scans oder eines Retina-Scans umfassen oder eine Benutzeridentifizierung basierend auf einer biometrischen Erkennung von Sprache des Sprachbefehls. Beispielsweise kann die Berechtigung nur erteilt werden, wenn die Authentifizierung erfolgreich ist.

Das Verfahren umfasst ferner Bereitstellen 240 der Information über die Berechtigung. Beispielsweise ist das Kontrollmodul 24 ausgebildet die Information über die Berechtigung über die zumindest eine Schnittstelle 22 bereitzustellen. Das Bereitstellen 240 kann einem Bereitstellen der Information über die Berechtigung 240 für die Zentralstelle 100 entsprechen.

In manchen Ausführungsbeispielen kann das Verfahren ferner Erhalten 250 von Information über einen Widerruf der Berechtigung von dem Eingabemodul umfassen. Beispielsweise kann das Kontrollmodul 24 ausgebildet sie, die Information über den Widerruf über das Eingabemodul zu erfassen, beispielsweise ähnlich zur Information über die Antwort als Position auf einem berührungsempfindlichen Bildschirm, als gesprochenen Text oder als Bewegungsgeste. Beispielsweise kann das Verfahren ferner ein Bereitstellen einer Bedienoberfläche mit einer Möglichkeit zum Widerruf der Berechtigung umfassen, wobei das Erhalten 250 auf der Möglichkeit zum Widerruf der Bedienoberfläche basiert. Die Information über den Widerruf kann anzeigen, dass der Nutzer die Berechtigung zum Öffnen des mobilen Logistikziels während des voraussichtlichen Lieferzeitraums widerruft. Das Verfahren kann ferner Bereitstellen 260 der Information über den Widerruf der Berechtigung umfassen, etwa für die Zentralstelle 100, beispielsweise über die zumindest eine Schnittstelle 22. Das Bereitstellen 260 kann beispielsweise ferner ein Verarbeiten der Information über den Widerruf umfassen, beispielsweise eine Transformation von Rohdaten, ähnlich Verfahrensschritt 230. Beispielsweise kann das Bereitstellen 260 ferner ein Erzeugen, Signieren und/oder Verschlüsseln eines Datenpakets umfassend die Information über den Widerruf umfassen. In zumindest manchen Ausführungsbeispielen kann die Information über den Widerruf der Berechtigung ferner Information über eine angepasste Berechtigung umfassen, die die vorherige Information über die Berechtigung ersetzt. In manchen Ausführungsbeispielen kann das Erhalten 250 ferner die Schritte 210-240 umfassen, um die angepasste Berechtigung zu bestimmen.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung für eine Zentralstelle
- 12: Zumindest eine Schnittstelle
- 14: Kontrollmodul
- 20: Vorrichtung für ein Mobilgerät
- 22: Zumindest eine Schnittstelle
- 24: Kontrollmodul
- 26: Ausgabemodul
- 28: Eingabemodul
- 100: Zentralstelle
- 110: Erhalten
- 112: Bereitstellen
- 114: Erhalten
- 120: Erhalten
- 122: Erhalten
- 130: Bestimmen
- 132: Berechnen
- 134: Vergleichen
- 140: Bestimmen
- 150: Bereitstellen
- 200: Mobilgerät des Empfängers
- 210: Erhalten
- 220: Bereitstellen
- 222: Erhalten
- 230: Bestimmen
- 240: Bereitstellen
- 250: Erhalten
- 260: Bereitstellen
- 300: Mobiles Lieferziel
- 400: Mobilgerät des Zustellers
- 2002: Mobile Applikation
- 2004: Mobile Applikation
- 3002: Anzeige der Benachrichtigung über die Berechtigungsanfrage
- 3004: Information über die Lieferanfrage
- 3006: Schieberegler
- 3012: Anzeige von Übersicht von Lieferungen / geplanten Zugriffen
- 3014: Übersicht von Lieferungen / geplanten Zugriffen
- 3016: Erteilte Berechtigungen
- 3018: Nicht erteilte Berechtigungen

## Patentansprüche

1. Verfahren für eine Zentralstelle (100) zum Bereitstellen eines Schlosssteuerungssignals für ein mobiles Logistikziel (300), umfassend
Erhalten (110) von Information über eine Lieferanfrage, wobei die Information über die Lieferanfrage Information über einen voraussichtlichen Lieferzeitraum einer Lieferung umfasst;
Bereitstellen (112) einer Berechtigungsanfrage zum Öffnen des mobilen Logistikziels (300) während eines Lieferzeitraums für ein Mobilgerät (200) eines Empfängers der Lieferung basierend auf der Information über die Lieferanfrage und der Information über den voraussichtlichen Lieferzeitraum;
Erhalten (114) von Information über eine Berechtigung zum Öffnen des mobilen Logistikziels (300) während des voraussichtlichen Lieferzeitraums von dem Mobilgerät (200);
Erhalten (120) von Information über eine Schlossanfrage und von Zusteller-Standortinformation von einem Mobilgerät (200) eines Zustellers der Lieferung;
Erhalten (122) von Logistikziel-Standortinformation von dem Logistikziel (300);
Bestimmen (130) einer Zusteller-Berechtigung zum Öffnen des mobilen Logistikziels (300) basierend auf der Information über die Schlossanfrage und basierend auf der Information über die Berechtigung;
Berechnen (132) einer Zusteller-Standort-Differenz zwischen der Logistikziel-Standortinformation und der Zusteller-Standortinformation;
Vergleichen (134) eines Zeitstempels der Schlossanfrage mit dem voraussichtlichen Lieferzeitraum;
Bestimmen (140) des Schlosssteuerungssignals für das mobile Logistikziel (300) basierend auf der Zusteller-Berechtigung, basierend auf der Zusteller-Standort-Differenz und basierend auf dem Vergleichen (124) des Zeitstempels mit dem voraussichtlichen Lieferzeitraum; und
Bereitstellen (150) des Schlosssteuerungssignals für das mobile Logistikziel (300), falls der Zusteller berechtigt zum Öffnen des mobilen Logistikziels ist, falls die Zusteller-Standort-Differenz einer Distanz-Bedingung genügt, und falls der Zeitstempel innerhalb des voraussichtlichen Lieferzeitraums liegt.

2. Das Verfahren gemäß Anspruch 1, wobei das Erhalten (114) der Information über die Berechtigung vor dem Erhalten (120) der Information über der Schlossanfrage stattfindet.

3. Das Verfahren gemäß einem der vorhergehenden Ansprüche, wobei die Zusteller-Standortinformation Koordinaten eines Satelliten-basierten Positionierungssystems entspricht, und wobei das Berechnen (132) der Zusteller-Standort-Differenz auf einem Vergleich der Koordinaten der Zusteller-Standortinformation mit Koordinaten der Lieferziel-Standortinformation basiert.

4. Das Verfahren gemäß einem der vorhergehenden Ansprüche, ferner umfassend Erhalten von Information über einen Widerruf der Berechtigung von dem Mobilgerät (200) des Empfängers, wobei die Information über den Widerruf anzeigt, dass der Nutzer die Berechtigung zum Öffnen des mobilen Logistikziels während des voraussichtlichen Lieferzeitraums widerruft, und
wobei das Bestimmen (140) ferner auf der Information über den Widerruf basiert ist und/oder wobei das Bereitstellen (150) nicht ausgeführt wird, wenn die Berechtigung durch die Information über den Widerruf wiederrufen ist.

5. Verfahren für ein Mobilgerät (200), umfassend
Erhalten (210) einer Berechtigungsanfrage zum Öffnen eines mobilen Logistikziels (300) zur Lieferzeit, wobei die Berechtigungsanfrage auf Information über eine Lieferanfrage und auf Information über einen voraussichtlichen Lieferzeitraum der Lieferung basiert;
Bereitstellen (220) einer Benachrichtigung über die Berechtigungsanfrage für einen Nutzer des Mobilgeräts (200) über ein Ausgabemodul;
Erhalten (222) einer Information über eine Antwort des Nutzers des Mobilgeräts auf die Benachrichtigung über die Berechtigungsanfrage von einem Eingabemodul, wobei die Antwort anzeigt, ob der Nutzer der Berechtigungsanfrage zustimmt oder nicht;
Bestimmen (230) von Information über eine Berechtigung zum Öffnen des mobilen Logistikziels während des voraussichtlichen Lieferzeitraums basierend auf der Berechtigungsanfrage und basierend auf der Information über die Antwort; und
Bereitstellen (240) der Information über die Berechtigung.

6. Das Verfahren gemäß Anspruch 5, wobei das Ausgabemodul einem Bildschirm und das Eingabemodul einem berührungsempfindlichen Sensor entspricht, und wobei die Antwort einer Position eines Schiebereglers in einer visuellen Darstellung des Schiebereglers entspricht,
und/oder wobei das Eingabemodul ein Mikrofon umfasst, und wobei die Information über die Antwort eine Aufnahme eines Sprachbefehls umfasst,
und/oder wobei das Eingabemodul einen Bewegungssensor umfasst, und wobei die Information über die Antwort einer vorgegebenen Bewegung des Bewegungssensors entspricht.

7. Das Verfahren gemäß einem der Ansprüche 5 oder 6, wobei die Benachrichtigung über die Berechtigungsanfrage ferner eine Benachrichtigung über eine Authentifizierungsanfrage für den Nutzer umfasst, wobei die Information über die Antwort ferner Information über eine Authentifizierung des Nutzers umfasst, und wobei das Bestimmen (230) der Information über die Berechtigung ferner auf der Authentifizierung des Nutzers basiert.

8. Das Verfahren gemäß einem der Ansprüche 5 bis 7, ferner umfassend Erhalten (250) von Information über einen Widerruf der Berechtigung von dem Eingabemodul, wobei die Information über den Widerruf anzeigt, dass der Nutzer die Berechtigung zum Öffnen des mobilen Logistikziels während des voraussichtlichen Lieferzeitraums widerruft; und
Bereitstellen (260) der Information über den Widerruf der Berechtigung.

9. Programm mit einem Programmcode zum Durchführen zumindest eines Verfahrens der vorhergehenden Ansprüche, wenn der Programmcode auf einem Computer, einem Prozessor, einem Kontrollmodul (14; 24) oder einer programmierbaren Hardwarekomponente ausgeführt wird.

10. Vorrichtung (10) für eine Zentralstelle (100) zum Bereitstellen eines Schlosssteuerungssignals für ein mobiles Logistikziel (300), umfassend
zumindest eine Schnittstelle (12), ausgebildet zur Kommunikation mit einem Mobilgerät (200) eines Empfängers einer Lieferung, zur Kommunikation mit dem mobilen Logistikziel (300), und zur Kommunikation mit einem Mobilgerät (400) eines Zustellers der Lieferung; und
ein Kontrollmodul (14), ausgebildet zum:
Erhalten von Information über eine Lieferanfrage über die zumindest eine Schnittstelle (12), wobei die Information über die Lieferanfrage Information über einen voraussichtlichen Lieferzeitraum der Lieferung umfasst,
Bereitstellen einer Berechtigungsanfrage zum Öffnen des mobilen Logistikziels (300) während eines Lieferzeitraums für das Mobilgerät des Empfängers der Lieferung über die zumindest eine Schnittstelle (12) basierend auf der Information über die Lieferanfrage und der Information über den voraussichtlichen Lieferzeitraum,
Erhalten von Information über eine Berechtigung zum Öffnen des mobilen Logistikziels (300) während des voraussichtlichen Lieferzeitraums von dem Mobilgerät (200) über die zumindest eine Schnittstelle (12),
Erhalten von Information über eine Schlossanfrage und von Zusteller-Standortinformation von dem Mobilgerät (400) des Zustellers der Lieferung über die zumindest eine Schnittstelle (12),
Erhalten von Logistikziel-Standortinformation von dem Logistikziel (300) über die zumindest eine Schnittstelle (12),
Bestimmen einer Zusteller-Berechtigung zum Öffnen des mobilen Logistikziels (300) basierend auf der Information über die Schlossanfrage und basierend auf der Information über die Berechtigung,
Berechnen einer Zusteller-Standort-Differenz zwischen der Logistikziel-Standortinformation und der Zusteller-Standortinformation,
Vergleichen eines Zeitstempels der Schlossanfrage mit dem voraussichtlichen Lieferzeitraum,
Bestimmen des Schlosssteuerungssignals für das mobile Logistikziel (300) basierend auf der Berechtigung des Zustellers, basierend auf der Zusteller-Standort-Differenz und
basierend auf dem Vergleichen des Zeitstempels mit dem voraussichtlichen Lieferzeitraum, und
Bereitstellen des Schlosssteuerungssignals für das mobile Logistikziel (300) über die zumindest eine Schnittstelle (12), falls der Zusteller berechtigt zum Öffnen des mobilen Logistikziels ist, falls die Zusteller-Standort-Differenz einer Distanz-Bedingung genügt und falls der Zeitstempel innerhalb des voraussichtlichen Lieferzeitraums liegt.

11. Vorrichtung (20) für ein Mobilgerät (200), umfassend
zumindest eine Schnittstelle (12), ausgebildet zur Kommunikation mit einer Zentralstelle (100); und
ein Kontrollmodul (24), ausgebildet zum:
Erhalten einer Berechtigungsanfrage zum Öffnen eines mobilen Logistikziels (300) während eines Lieferzeitraums über die zumindest eine Schnittstelle (12), wobei die Berechtigungsanfrage auf Information über eine Lieferanfrage und auf Information über einen voraussichtlichen Lieferzeitraum der Lieferung basiert,
Bereitstellen einer Benachrichtigung über die Berechtigungsanfrage für einen Nutzer des Mobilgeräts (200) über ein Ausgabemodul (26),
Erhalten einer Information über eine Antwort des Nutzers des Mobilgeräts auf die Benachrichtigung über die Berechtigungsanfrage von einem Eingabemodul (28), wobei die Antwort anzeigt, ob der Nutzer der Berechtigungsanfrage zustimmt oder nicht,
Bestimmen (230) von Information über eine Berechtigung zum Öffnen des mobilen Logistikziels während des voraussichtlichen Lieferzeitraums basierend auf der Berechtigungsanfrage und basierend auf der Information über die Antwort, und
Bereitstellen der Information über die Berechtigung über die zumindest eine Schnittstelle (22).
